# EUROPÄISCHE PATENTANMELDUNG

(11) **EP 1 605 173 A1**
(43) Veröffentlichungstag der Anmeldung: **14.12.2005**
(21) Anmeldenummer: 04291432.5
(22) Anmeldetag: 08.06.2004
(51) Int. Cl.: F16C 11/06

(54) **Elastiches Gelenk mit rotationssymmetrischem Kern**

(71) Anmelder: Woco AVS S.A.S., 58302 Decize Cedex (FR)
(72) Erfinder: Vanryckeghem, Charles, 58300 Devay (FR)
(74) Vertreter: Weber-Bruls, Dorothée

(57) **Zusammenfassung**

Elastisches Gelenk mit einem rotationsförmigen Kern, einer den Kern größtenteils umschließenden Elastomerschicht (17) und einer zwischen dem Kern und der Elastomerschicht (17) angeordneten Reiblage (21), die zumindest eine dem Kern zugewandte Gleitreibfläche aufweist.

## Beschreibung

Die Erfindung betrifft ein elastisches Gelenk, das auf Torsion und/oder mit axialen und/oder radialen Schub- und Zugkräften belastet werden kann. Derartige elastische Gelenke werden unter anderem auf dem Gebiet der Eisenbahntechnik eingesetzt, um zwei Bauteile miteinander elastisch zu verbinden.

Es sind im Wesentlichen zwei Gelenktypen bekannt, die einen Krafttransfer zwischen zwei Bauteilen bei Billigung einer Relativbewegung zwischen den Bauteilen sicherstellen sollen. Zum einen sind elastische Gelenke mit einer Außen- und einer Innenhülse zu nennen, die mit einem elastischen Körper verbunden ist. Die Außenhülse wie die Innenhülse werden an die zu verbindenden Bauteile befestigt. Das elastische Gelenk hat sich vor allem in den Einsatzfällen bewährt, wenn eine stark begrenzte Torsionsbewegung zwischen den Bauteilen elastisch zuzulassen ist, wobei radiale und axiale Bewegungsamplituden zur Dämpfung von Linearschwingung beschädigungsfrei ertragen werden sollen. Allerdings können derartige elastische Gelenke nur eingeschränkt oder überhaupt nicht bei Kopplungsanordnungen zum Einsatz kommen, bei denen das Gelenk große Rotationsbewegungsamplituden zwischen den zu verbindenden Bauteilen erlauben soll.

Zum anderen haben sich mechanische Gelenke oder Reibgelenke bewährt, wenn betriebsmäßig große Drehamplituden zu ertragen sind. Allerdings können sich mechanische Gelenke kaum ein radiales oder axiales Bewegungsspiel erlauben, das einen hohen Verschleiß an Reibungsflächen des mechanischen Gelenks verursacht.

Bei Kopplungsverbindungen, welche sowohl eine ausgeprägte, unter Umständen elastische Bewegungsfreiheit in Rotationsrichtung als auch ein elastisches Bewegungsspiel in radialer und/oder axialer Richtung sicherstellen sollen, könnten durch Kombination aus einem elastischen und einem mechanischen Gelenk geschaffen werden. Dies würde neben aufwendigen Konstruktionen auch einen hohen Montageaufwand fordern, was sich in sehr hohe Produkt- und Fertigungskosten niederschlagen würde.

Es ist Aufgabe der Erfindung, ein kostengünstiges elastisches Gelenk zu schaffen, das bei geringem Montageaufwand sowohl einen hohen Freiheitsgrad bezüglich Rotationsbewegungen der zu verbindenden Bauteile als auch ein elastisches, radiales und/oder axiales Spiel oder eine elastische, radiale und/oder axiale Verschiebung zwischen diesen bereitstellt.

Diese Aufgabe wird durch Patentanspruch 1 gelöst.

Danach ist ein elastisches Gelenk mit einem rotationsförmigen starren Innenkörper, wie einem Kern, der vorzugsweise als Kugelkopf ausgebildet ist, einer den Kern größtenteils umschließenden oder einhüllenden Elastomerschicht und einer zwischen dem Kern und der Elastomerschicht angeordneten Reiblage versehen, die eine dem Kern zugewandte Gleitreibfläche aufweist und vorzugsweise annähernd den gesamten Kern bedeckt. Der rotationsförmige, insbesondere kreissymmetrische, Kern kann aus Metall sein, wobei jegliche andere ähnlich feste Materialien herangezogen werden können, welche die auf das elastische Gelenk wirkenden Kräfte ertragen können. Der Kern kann außerdem oberflächenbehandelt sein, um für besonders hohe Lebensdauerwerte der im Betrieb auftretenden Gleitreibkräfte verschleißarm standhalten zu können.

Bei einer bevorzugten Ausführung ist die Gleitreibfläche dazu ausgelegt, eine Drehbewegung zwischen der Reiblage und dem Kern zuzulassen, insbesondere zu unterstützen. Dabei kann die Gleitreibfläche abhängig von den zu erwartenden Betriebsbedingungen dazu ausgelegt sein, erst ab einer insbesondere vorbestimmbaren Torsionskraftschwelle eine relative Gleitbewegung zwischen dem Kern und der umschließenden Elastomerschicht zuzulassen. Bis die Torsionskraftschwelle erreicht ist, bei der zwischen dem Kern und der Reiblage ein Haftreibkontakt besteht, stellt das erfindungsgemäße elastische Gelenk ein elastisches Rotationsspiel bereit. Sollten die Bauteile von der aufgebrachten Torsionskraft befreit werden, gelangen die Bauteile aufgrund der Rotationselastizität wieder in ihre ursprüngliche Lage zurück. Bei Überschreitung der Torsionskraftschwelle wird der Haftkontakt zwischen Reiblage und Kern unter Bildung eines Gleitreibkontakts aufgehoben, und eine freie Verdrehbarkeit des einen Bauteils oder des Kerns gegenüber dem anderen Bauteil oder der Reiblage ist gewährleistet. Die auftretenden Torsionskräfte werden durch den Gleitreibverlust zumindest teilweise kompensiert. Insbesondere soll die Reiblage in einem klebstofffreien Kontakt an dem Kern anliegen. Vorzugsweise ist die Elastomerschicht an die Reiblage geklebt.

Um besonders geringe Drehbewegungswiderstände oder Haftreibungskräfte an der Gleitreibfläche einzustellen, kann vorzugsweise zwischen der Reiblage und dem Kern ein Schmiermittel, wie Öl oder Fett, vorgesehen sein.

Bei einer bevorzugten Ausführung der Erfindung umfasst die Reiblage eine der Elastomerschicht zugewandte Haftkontaktfläche.

Vorzugsweise ist der Reibungskoeffizient an der Gleitreibfläche der Reiblage kleiner als der an einer Haftkontaktgegenfläche der Elastomerschicht eingestellt. Auf diese Weise ist das erfindungsgemäße elastische Gelenk auf bestimmte Betriebsbedingungen dahingehend abstimmbar, dass eine derart starke Haftkontaktfläche zwischen der Reiblage und der Elastomerschicht ausgebildet ist, dass eine Relativbewegung zwischen der Reiblage und der Elastomerschicht weitestgehend bei jeglicher Belastung ausgeschlossen ist.

Bei einer bevorzugten Ausführung der Erfindung ist die Reiblage aus Kunststoff, insbesondere aus Polyurethan, gebildet. Bei einer Weiterbildung der Erfindung ist die Gleitreibfläche der Reiblage zur Außenkontur des Kerns formkomplementär gebildet. Ist zum Beispiel die Außenkontur des Kerns im Wesentlichen kugelförmig ausgestaltet, so besitzt die Reiblage eine entsprechende sphärische Innenseite und bei konstanter Reiblagenstärke auch eine entsprechend sphärische Außenseite.

Bei einer bevorzugten Ausführung der Erfindung ist die Reiblage des elastischen Gelenks aus einem Stück gefertigt. Alternativ kann die Reiblage auch aus wenigstens zwei, vorzugsweise vier, separaten Reiblagenstücken gebildet sein, die vorzugsweise gleich dimensioniert sind. Für die Montage und Fertigung des elastischen Gelenks können die wenigstens zwei Reiblagenstücke an einander gefügt sein. Dabei können kleine Fugen zwischen den Reiblagenstücken gebildet sein, um eine Verrückbarkeit der Reiblagenstücke relativ zueinander zumindest bei der Montage zu ermöglichen. Die Fugen können auch als Reservoir für Schmiermittel dienen. Die Reiblagenstücke können zur Bildung der den Kern umschließenden Reiblage auch lose aneinander gefügt sein. Die lose Anordnung kann auch im montierten Zustand von Vorteil sein, um verschiedene Verdrehwiderstandsgrößen abhängig vom Drehweg des Kerns relativ zur Reiblage zu schaffen. Die lose Anordnung kann derart ausgelegt sein, dass zum Nähern der Reiblagestücke, also zum Überwinden der durch die lose Anordnung entstehenden Fugen zwischen den Reiblagenstücken, eine geringe Torsionskraft ausreicht, wobei, nachdem die Reiblagenstücke aneinander gestoßen sind, höhere Verdrehwiderstände überwunden werden müssen, um den Kern relativ zur Reiblage weiter zu verdrehen.

Wie oben ausgeführt ist, kann eine im Wesentlichen kugelförmige Grundform des Kerns und damit der Reiblage bevorzugt sein. Allerdings sind auch jegliche andere Rotations- oder Kreissymmetrie-Formen, wie eine konische, zylindrische Grundform, heranziehbar.

Um ein radiales Verschleißspiel, das eine ungedämpfte radiale Bewegung der Bauteile induziert und weitere Verschleißerscheinungen begünstigt, zu unterdrücken, kann bei einer bevorzugten Ausführung der Erfindung die Elastomerschicht des elastischen Gelenks vorkomprimiert sein. Damit wird erreicht, dass die Reiblage auch im belastungsfreien Betriebszustand des elastischen Gelenks in Kontakt, insbesondere um Reibkontakt, mit dem Kern gehalten wird. Es soll klar sein, dass bei bestimmten Belastungsfällen mit großen radialen und/oder axialen Kräften, ein Kontaktverlust zwischen Flächenbereichen der Reiblage oder des Kerns zu erwarten ist. Allerdings kann die Vorkomprimierung derart ausgestaltet sein, dass zumindest im unbelasteten Zustand die Elastomerschicht die Reiblage vollumfänglich axial und radial nach innen an den Kern drückt.

Bei einer bevorzugten Ausführung der Erfindung ist die Elastomerschicht von einer Außenarmatur vorzugsweise vollständig insbesondere diese schützend umschlossen. Dabei kann sich die Elastomerschicht an der Außenarmatur derart abstützen, dass die Vorkomprimierung radial nach innen wirkt. Die Außenarmatur ist dazu ausgelegt, eine starre Befestigung des elastischen Gelenks an ein Bauteil zu ermöglichen, das mit dem Kern des elastischen Gelenks elastisch zu koppeln ist.

Bei einer bevorzugten Ausführung der Erfindung weist die Elastomerschicht eine zur Reiblage formkomplementäre Innenseite auf. Vorzugsweise ist die Reiblage bei gleich bleibender Reiblagenstärke innenseitig sowie außenseitig formkomplementär zum Kern ausgeführt, wobei sich die Innenseite der Elastomerschicht an die Außenseite der Reiblage anpasst.

Um eine besonderes einfache Befestigung des elastischen Gelenks realisieren zu können, ist eine zylindrische oder kegelförmige Außenseite des elastischen Gelenks wünschenswert. Dies kann vor allem dadurch erreicht werden, dass eine zylindrische oder kegelförmige Außenarmatur vorgesehen ist, deren zylindrische Innenseite mit einer zylindrisch geformten Außenseite der Elastomerschicht verbunden ist, insbesondere daran anvulkanisiert ist.

Bei einer bevorzugten Ausführung der Erfindung ist der Kern ein kugelförmiger Körper, von dem weg sich diametral entgegengesetzte Schäfte erstrecken. Die Schäfte können mit einer Befestigungseinrichtung, insbesondere einer durchgehenden Bohrung, versehen sein, um mit den schwingungsbelasteten Bauteilen insbesondere eines Eisenbahnwagons oder einer Zug-oder Schublokomotive verbunden zu werden. Dabei ist ein für das erfindungsgemäße Gelenk bevorzugter Belastungsfall dadurch definiert, dass die mit dem elastischen Gelenk zu verbindenden Bauteile einer kombinierten Torsions- und Schub- oder Zugbelastung ausgesetzt sind.

Mit dem erfindungsgemäßen Gelenk kann also ein elastisches Kugelgelenk gebildet werden, das zum einen einen geringen Widerstand gegen Drehbewegungen aufweist und elastische Linearbewegungen in radiale und/oder axiale Richtung zulässt.

Das erfindungsgemäße Gelenk kann in der Eisenbahntechnik oder in der Fahrzeugtechnik, insbesondere im Bereich der Radaufhängungen, installiert werden.

Weitere Vorteile, Merkmale und Eigenschaften der Erfindung werden durch die folgende Beschreibung bevorzugter Ausführungen der Erfindung anhand der beiliegenden Zeichnungen deutlich, in denen zeigen:
- Figur 1: eine Querschnittsansicht durch ein erfindungsgemäßes elastisches Gelenk in dessen montierten Zustand; und
- Figur 2: eine perspektivische Ansicht mit einer explosionsartigen Darstellung des elastischen Gelenks in einer weiteren Ausführung.

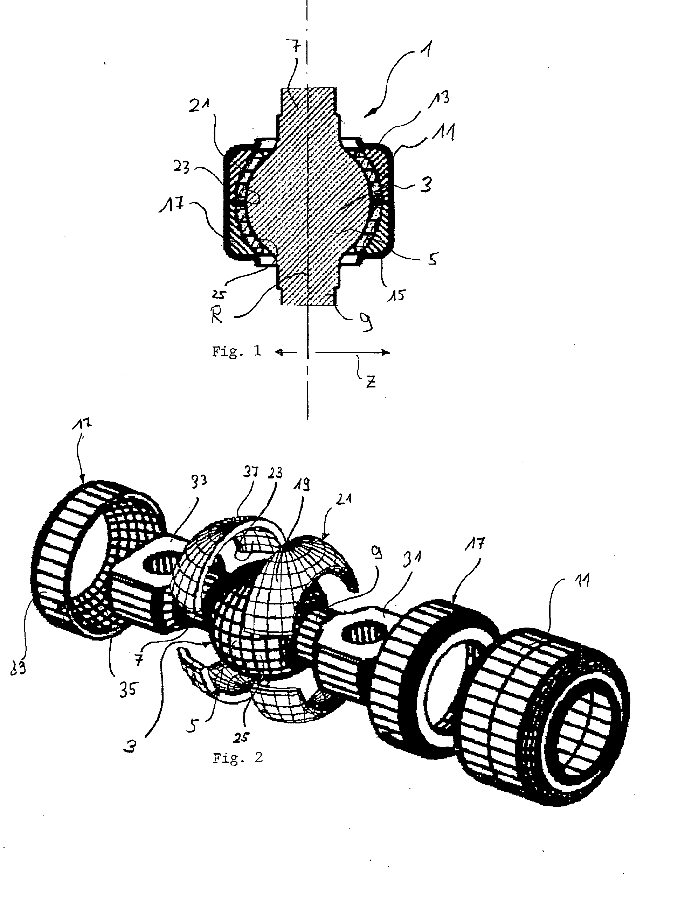

Figur 1 zeigt eine bevorzugte Ausführung eines erfindungsgemäßen elastischen Gelenks 1, das einen Metallkern 3 aufweist. Der Metallkern 3 hat einen mittigen Kugelabschnitt 5, an dem sich längs einer Rotationsachse R des elastischen Gelenks 1 Schaftabschnitte 7 und 9 einstückig anschließen, die nur teilweise dargestellt sind.

Der kugelförmige Abschnitt 5 des Metallkerns 3 ist von weiteren Bauteilen des elastischen Kugelgelenks 1 in einem sandwichartigen Aufbau umgeben.

Radial außen liegt eine Außenhülse 11 mit radial nach innen weisenden Randvorsprüngen 13, 15. Die Außenhülse 11 umgibt eine Elastomerschicht 17, welche eine im Wesentlichen zylindrische Außenseite und eine kugelsphärische Innenseite umfasst. Damit hat die Elastomerschicht 17 eine im Querschnitt von der axialen Mitte des elastischen Gelenks 1 in beide Axialrichtungen zunehmende Dicke.

Zwischen dem Metallkern 3 und der Elastomerschicht 17 ist eine Reiblage 21 angeordnet, wobei die der Elastomerschicht 17 zugewandte äußere Seitenfläche 19 der Reiblage 21 mit der Elastomerschicht 17 verklebt oder mit einem hohen Reibungskoeffizienten versehen ist, so dass eine relative Drehbewegung zwischen der Reiblage 21 und der Elastomerschicht 17 verhindert ist.

Die Reiblage 21 weist erfindungsgemäß eine Gleitreibfläche 23 auf, welche der Außenfläche 25 des Metallkerns 3 zugewandt ist. Die Gleitreibfläche 23 und die Außenfläche 25 bilden gemeinsam einen derart geringen Reibungskoeffizienten, dass bei einer Torsionsbelastung um die Rotationsachse R, welche Belastung entweder an der Außenhülse 11 oder an einem der Schäfte 7, 9 angreift, eine relative Drehbewegung zwischen dem Metallkern 3 und der Reiblage 21 zugelassen wird. Dabei gewährleistet die Elastomerschicht 17, dass Schub- oder Zugkräfte durch eine elastische Relativbewegung des Metallkerns 3 gegenüber der Außenhülse 11 in Radialrichtung Z und in Axialrichtung R kompensiert werden.

Die Elastomerschicht 17 hat eine im unmontierten Zustand im Vergleich zur Außenhülse 11 größere radiale Ausdehnung, so dass sie im montierten Zustand vorkompromiert ist und einen Kontaktverlust zumindest im unbelasteten Betriebszustand sowohl zwischen der Reiblage 21 und der Elastomerschicht 17 als auch zwischen dem Metallkern 3 und der Reiblage 21 verhindert ist.

Des Weiteren kompensiert die vorkomprimierte Elastomerschicht den Verschleiß der Reiblage 21. Dabei kann die Vorspannung der Elastomerschicht bei sehr groß dimensionierten elastischen Gelenken mit einem Metallkern 3 von über 10 cm eine Reiblage mit einer Stärke von 2 cm vorgesehen sein, bei der eine Verschleißerscheinung von 80% der ursprünglichen Stärke der Reiblage durch die Vorspannung zu kompensieren ist. Üblicherweise kann die Vorspannung dazu eingestellt sein, einen Normalverschleiß von 10% der ursprünglichen Reiblagenstärke zu kompensieren.

Wie in Figur 1 ersichtlich ist, besteht die Reiblage 21 aus wenigstens zwei Reiblagenstücken, die sich von einem radialen Hochpunkt axial radial nach innen erstrecken. Zwischen den wenigstens zwei Reiblagenstücken ist ein Freiraum vorgesehen, welcher als Reservoir für ein Schmiermittel, wie Fett oder Öl, dienen kann, damit eine Wärmeableitung von der Gleitreibfläche 23 weg über das Schmiermittel sichergestellt ist.

Das in Figur 2 gezeigt elastische Gelenk entspricht im Wesentlichen dem Aufbau des elastischen Gelenks nach Figur 1, wobei vier Reiblagenstücken verwendet werden. Zur besseren Lesbarkeit der Figurenbeschreibung werden identische Bezugszeichen für gleiche oder ähnliche Bauteile verwendet.

Die vier Reiblagenstücke der Reiblage 21 sind in ihrer Form im Wesentlichen identisch, wobei zu jedem der Reiblagenstücke jeweils ein zu einer radialen und axialen Symmetrieebene symmetrisches Pendant vorgesehen ist.

In Figur 2 ist das elastische Gelenk 1 mit beidseitig ausgeführten Befestigungseinrichtung 31, 33 vorgesehen, die an Torsionsbelastungen und Schub- oder Zugbelastungen ausgesetzten Bauteilen (nicht dargestellt) anbringbar sind.

Wie in Figur 2 ersichtlich ist, umfassen die aneinander gefügten Reiblagenstücke eine kugelförmige Außenform, wobei die Innenseite der Elastomerschicht 17 formkomplementär zur äußeren Seitenfläche 19 der Reiblage 21 ist. Die Außenseite 37 der Elastomerschicht 17 ist hingegen wieder zylindrisch ausgeführt, um ein montageleichtes Einpressen der Elastomerschicht 17 mittels der Außenhülse 11 zu ermöglichen, damit die Elastomerschicht 17 im montierten Zustand des elastischen Gelenks vorkomprimiert ist.

Im Belastungsfall nimmt das erfindungsgemäße elastische Gelenk sowohl Radialkräfte elastisch auf, indem ein bestimmter elastischer Dämpfungsweg genutzt wird, der im Wesentlichen durch die Dicke der Elastomerschicht 17 abstimmbar ist. Beim Auftreten von Torsionskräften werden diese bis zum Eintreten einer Gleitbewegung zwischen Metallkern 3 und Reiblage 21 elastisch kompensiert. Bei höheren Torsionskräften wird zumindest ein Teil der Torsionskräfte durch Gleitreibung gedämpft, wobei eine Verdrehbarkeit des Metallkerns gegenüber der Außenhülse 11 zugelassen ist.

Die in der vorstehenden Beschreibung, in der Zeichnung sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein.

### Bezugszeichenliste

- 1: elastisches Gelenk
- 3: Metallkern
- 5: Kugelabschnitt
- 7,9: Schaftabschnitt
- 11: Außenhülse
- 13, 15: Randvorsprünge
- 17: Elastomerschicht
- 19: Seitenfläche
- 21: Reiblage
- 23: Reibkontaktfläche
- 25: Außenfläche
- 31, 33: Befestigungseinrichtung
- 35: Innenseite
- 37: Außenseite
- R: Rotationsachse
- Z: Radialrichtung

## Patentansprüche

1. Elastisches Gelenk mit einem rotationsförmigen starren Innenkörper, einer den Innenkörper größtenteils umschließenden Elastomerschicht (17) und einer zwischen dem Innenkörper und der Elastomerschicht (17) angeordneten Reiblage (21), die zumindest eine dem Innenkörper zugewandte Gleitreibfläche aufweist.

2. Elastisches Gelenk nach Anspruch 1, bei dem die Gleitreibfläche dazu ausgelegt ist, eine Drehbewegung zwischen der Reiblage (21) und dem Innenkörper zuzulassen.

3. Elastisches Gelenk nach Anspruch 1 oder 2, bei dem die Reiblage (21) in einen klebstofffreien Kontakt mit dem Innenkörper gebracht ist.

4. Elastisches Gelenk nach einem der Ansprüche 1 bis 3, bei dem zwischen der Reiblage (21) und dem Innenkörper ein Schmiermittel vorgesehen ist.

5. Elastisches Gelenk nach einem der Ansprüche 1 bis 4, bei dem die Reiblage (21) eine der Elastomerschicht (17) zugewandte Haftkontaktfläche aufweist.

6. Elastisches Gelenk nach Anspruch 5, bei dem der Reibungskoeffizient an der Gleitreibfläche kleiner als der an der Haftkontaktfläche ausgebildet ist.

7. Elastisches Gelenk nach einem der Ansprüche 1 bis 6, bei dem die Elastomerschicht (17) an die Reiblage (21) geklebt ist.

8. Elastisches Gelenk nach einem der Ansprüche 1 bis 7, bei dem die Reiblage (21) aus Kunststoff, insbesondere aus Polyurethan, gebildet ist.

9. Elastisches Gelenk nach einem der Ansprüche 1 bis 8, bei dem die Gleitreibfläche der Reiblage zur Außenkontur des Innenkörpers formkomplementär ist.

10. Elastisches Gelenk nach einem der Ansprüche 1 bis 9, bei dem die Reiblage (21) aus einem Stück gefertigt ist oder wenigstens zwei, vorzugsweise vier, separate Reiblagenstücke aufweist, die insbesondere zur Bildung der den Innenkörper umschließenden Reiblage (21) aneinander gefügt sind.

11. Elastisches Gelenk nach Anspruch 10, bei dem die Reiblagenstücke zur Bildung der den Innenkörper umschließenden Reiblage (21) lose aneinander gefügt sind.

12. Elastisches Gelenk nach einem der Ansprüche 1 bis 11, bei dem die Reiblage (21) sphärisch, insbesondere kugelförmig, konisch, zylindrisch oder dergleichen, geformt ist.

13. Elastisches Gelenk nach einem der Ansprüche 1 bis 12, bei dem die Elastomerschicht (17) derart vorkomprimiert ist, dass die Reiblage (21) mit dem Innenkörper in Reibkontakt gebracht ist.

14. Elastisches Gelenk nach einem der Ansprüche I bis 13, bei dem die Elastomerschicht (17) derart vorkomprimiert ist, dass ein Toleranzverschleiß der Reiblage unter Aufrechterhaltung des Kontakts zwischen der Reiblage und dem Innenkörper kompensiert ist, wobei insbesondere der Toleranzverschleiß in einem Bereich von 10 % der ursprünglichen Stärke der Reiblage definierbar ist.

15. Elastisches Gelenk nach einem der Ansprüche 1 bis 14, bei dem die Elastomerschicht (17) von einer Außenarmatur umschlossen ist, insbesondere derart, dass sich die vorkomprimierte Elastomerschicht (17) an der Außenarmatur abstützt.

16. Elastisches Gelenk nach einem der Ansprüche 1 bis 15, bei dem die Elastomerschicht (17) eine zur Reiblage (21) formkomplementäre Innenseite und eine zylindrische oder kegelförmige Außenseite umfasst.

17. Elastisches Gelenk nach einem der Ansprüche 1 bis 16, bei dem der Innenkörper kugelförmig ist, von dem weg sich zwei Schäfte diametral entgegengesetzt erstrecken, von denen mindestens eine mit einer Einrichtung zum Befestigen des Innenkörpers an einem Bauteil versehen ist, das insbesondere im Betrieb einer Torsionsbelastung und/oder radialen Schub- und/oder Zugkräften ausgesetzt ist.

18. Elastisches Gelenk nach einem der Ansprüche 1 bis 17, das als elastisches Kugelgelenk ausgebildet ist.
